# EUROPEAN PATENT SPECIFICATION

(11) **EP 0 835 178 B1**
(45) Date of publication and mention of the grant of the patent: **16.08.2001**
(21) Application number: 96915804.7
(22) Date of filing: 15.05.1996
(51) Int. Cl.: B29C 65/08

(54) **WELDING CONTROLLER**
SCHWEISSSTEUEREINRICHTUNG
CONTROLEUR DE SOUDAGE

(30) Priority: 26.06.1995 US 494484
(43) Date of publication of application: 15.04.1998
(73) Proprietor: MINNESOTA MINING AND MANUFACTURING COMPANY, St. Paul, Minnesota 55133-3427 (US)
(72) Inventor: POCHARDT, Donald, L., Saint Paul, MN 55133-3427 (US); NAYAR, Satinder, K., Saint Paul, MN 55133-3427 (US); LOUKS, John, W., Saint Paul, MN 55133-3427 (US); CARLSON, Richard, K., Saint Paul, MN 55133-3427 (US)
(74) Representative: Hilleringmann, Jochen, Dipl.-Ing.
(86) International application number: US9606905
(87) International publication number: WO9701432

(56) References cited:
- EP-A- 0 421 019
- DE-A- 4 206 584
- GB-A- 2 279 034
- MODERN PLASTICS INTERNATIONAL, vol. 24, no. 9, 1 September 1994, page 91/92 XP000473085 MYERS J: "WELDING AIDS QUALITY, SIMPLIFIES ASSEMBLY"

## Description

The present invention relates to ultrasonic welding systems. More particularly, the present invention relates to continuous motion and plunge welding systems.

Plunge welding is the most common use of ultrasonic energy for plastic welding. In this process, two plastic parts to be joined are placed directly below the ultrasonic horn. The horn plunges, (travels down) and transmits ultrasonic vibrations into the top part. The vibrations travel through the top part to the joint area or interface of the two parts. Here vibrational energy is converted to heat due to intermolecular friction that melts and fuses the two plastic parts. When the vibrations stop, the two parts solidify under force producing a weld at the joining surface.

Continuous ultrasonic welding is a process typically used for sealing fabrics and films. In the continuous mode, typically the ultrasonic horn is stationary and the film or fabric is moved beneath it. Scan welding is a type of continuous welding in which the plastic part is scanned beneath a stationary horn or group of horns. In traverse welding (a type of continuous welding), both the table and the material being welded remain stationary with respect to each other while moving underneath the horn or while the horn moves over it.

Known continuous welding systems provide constant weld amplitude, force, and weld speeds during welding and are designed for welding constant volumes, areas, and material thicknesses. For applications in which the weld surface area or weld volume are not constant, overwelding and underwelding occurs. Known methods of compensation include using mechanical stops, cam followers, and sacrificial weld areas. Sacrificial weld areas are areas that are included in the welding process to balance the weld energies and forces but are typically not required for product performance. Other methods include altering the product design or the orientation of the parts as they are introduced to the welder to provide a more constant weld area. No known equipment can alter all of the primary weld variables of amplitude, force, and speed during a continuous welding process as a function of part position, weld depth, or other external or internal control variables.

Varying weld surface area, varying part thickness, and varying part composition frequently are encountered when continuously scan welding multiple parts. Accurate weld horn-to-part positioning, a programmable weld horn force, a programmable weld dwell time, a programmable weld amplitude, or any combination of these, are required to make consistent welds. Typically, to accommodate these requirements, a continuous motion device such as a rotary anvil or a traversing table on which the part is welded must be capable of rapid acceleration and deceleration. Similarly, the force applied to the part by the welding horn must be capable of being rapidly varied.

Dukane Corporation Ultrasonics Division, St. Charles, Illinois, sells a welder in which the weld force can be changed once during a plunge weld. W. Michaeli and W. Korte, Kunststoffe German Plastics 83 (1993) 9, "Better Weld Quality in Ultrasonic Welding," Hanser Publishers, Munich, Germany, describes changing force twice during a plunge weld.

Branson Ultrasonics Corporation, Danbury, Connecticut, sells a welder power supply (Model No. 900 BA/900 MA Series Advanced Power Supply) in which amplitude can be changed by external input.

U.S. -A- 4,973,876 describes a power supply for regulating amplitude by maintaining a constant amplitude versus load or line voltage. This reference also discusses increasing amplitude during the start-up of ultrasonic energy to help large ultrasonic horns to start oscillation easily.

U.S. -A- 5,199,630 discusses an amplitude control system for plunge welding where the amplitude of the horn is measured using a sensor. A comparator determines how much the measured value deviates from the desired value. Then the comparator sends a signal to the power supply to correct the deviation. This deviation is corrected by either adjusting the input voltage to the transducer which produces the amplitude or by correcting the speed of the infed wire to make ultrasonic wire connections of electrical circuits to metallic lead frame strips.

The Michaeli and Korte article discusses a two-step switchover from high to low welding force for a plunge welding operation to control the melt flow between parts to achieve optimum tensile strength. This uses a solenoid valve that is too slow for high speed scan welding applications.

DE-A-3313918 discusses monitoring the energy and weld displacement curves and adjusting force to obtain the desired energy and displacement in plunge welding. The welding distance is measured by an electric motion pickup and is compared to a predetermined set point. The curve matching technique is used. [In curve matching, this reference discusses that weld displacement and weld energy for an ideal condition is predetermined and programmed into a computer. For the weld trials, the weld energy and weld displacement are compared to the predetermined values or curves. As the welding is done in the plunge mode, weld displacement and weld energy curves are plotted with respect to weld time. This differs from scan welding, where these parameters would be evaluated with respect to the position of the part or table.] Hence, this reference is not applicable to scan welding. When a weld occurs, there is a certain amount of energy being transmitted which changes according to the duration of the weld time. Also, when two parts are joined, the two parts come close to each other when welding begins. The distance traveled during welding is referred to as displacement.

DD-A-281 038 discusses a method of regulating weld force for a plunge weld using a load cell to measure the force on the part which is to be welded and a processor to measure the actual force with a preset value. The processor switches solenoids and flow control valves to regulate the weld force. A second load cell determines the weld depth. This reference does not discuss scan or continuous welding. Also, this reference does not discuss any changes or profiling of the amplitude of vibration simultaneously with force.

The welding system according to DE-A-42 06 584 is provided with a temperature measuring device measuring the temperature of the weld as well as of the horn. The temperature data is compared to a characteristics map (or template map) to determing welding parameters. After this, the information is sent to a control unit and an intermediate control system to eventually control the welding device.

From GB-A-2 279 034, a method of controlling the power of a welding unit is known, in which the distance of an ultrasonic horn from an anvil is controlled so that the welding unit power will coincide with a predetermined control value. Moreover, from EP-A-0 421 019 a method and a device for ultrasonic welding are known, wherein the speed of the movement of the ultrasonic horn and its force are controlled according to a predetermined timing profile.

It is the object of the present invention to provide a method of welding parts as well as an apparatus for welding parts, in which welding is formed accurately according to welding parameters depending on the welding conditions of the parts to be welded.

According to the invention, this object is solved in that a method and an apparatus according to claims 1 and 3, respectively, are provided.

Particular embodiments of the invention are the subject of the dependent claims.

The present invention is a method and apparatus for welding parts by bringing a part into contact with a horn by providing relative motion between the part and the horn. The horn applies high frequency energy to the part. The weld force, weld speed, horn position, and any combination of the weld force, weld speed, weld amplitude, and horn position can be programmed and varied during welding. For example, these variables can be programmed versus part position for a continuous weld or versus time for a plunge weld.

According to the invention varying these parameters can be accomplished to control weld intensity without requiring using mechanical stops, cam followers, or sacrificial weld areas. Also, the parameters can be varied during welding as a function of one or more external preprogrammed or measured inputs to enable welding areas of different energy requirements. Examples of these inputs include temperature, weld velocity, force, frequency, position, weld volume, and weld energy. This invention can be used to weld non-uniform weld areas and part geometry, and non-random thicknesses where the weld pattern can not be changed to provide uniform force per unit area. This unit could also be used to provide controlled non-uniform weld intensity if desired.

The system could be used to sense the weld quality and automatically adjust in real time one or more weld parameters in response to the sensed weld quality to obtain the desired weld level. Sensing the weld quality and adjusting the parameters can be done by measuring incoming part thickness and automatically adjusting, measuring and controlling weld thickness; measuring and controlling weld temperature during welding; and measuring part frequency; and measuring energy feedback.

This system is useful for applications in which sacrificial weld areas, part orientation, and table or product design changes are not desired, do not function well, or are expensive. This system yields increased production rates, lower assembly costs, lower reject rates, and higher part quality.

Also, a plunge welding system of this invention includes varying at least the horn position, the weld force, the anvil position, or any two of the weld force, horn position, and the weld amplitude during welding.

The invention will be best understood from the following.

Figure 1 is a perspective view of a welding system of the present invention.

Figure 2 is a front view of the welder of the welding system of Figure 1 with parts broken away.

Figure 3 is a side view of the spring plunger of the welding system of Figure 1.

Figure 4 is a schematic view of the welding system of Figure 1.

The invention can provide an ultrasonic weld using either continuous welding, plunge welding, or a combination of both. The system can vary (also known as profile) and control the weld amplitude, weld force, table speed, table position, weld horn speed, and weld horn position simultaneously for a continuous or plunge weld. These parameters can be varied in any combination, in accordance with a preset profile, and in response to other external inputs.

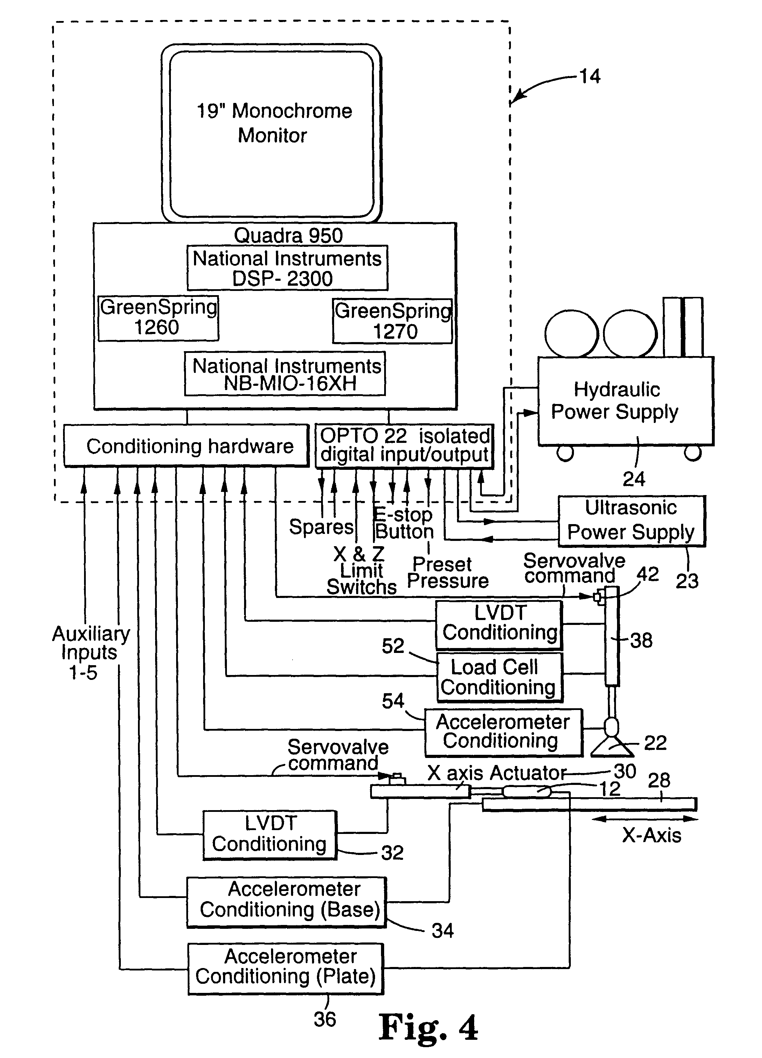

Figure 4 shows the relationship between the major system components of the welding system. Throughout this specification, the direction of travel of the part in the horizontal plane is along the X axis. The Y axis is perpendicular to the X axis in the horizontal plane. The Z axis is perpendicular to the X and Y axes in the vertical plane.

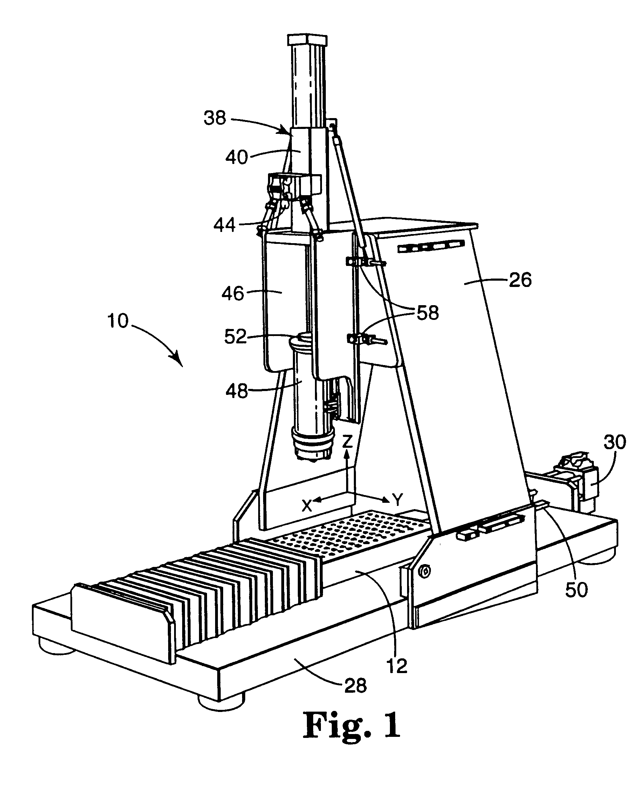

The welding system 10, shown in Figures 1-4, includes a traversing table 12, a controller 14, and an adapter 48. The adapter 48 encloses a converter 18, and a booster 20, which is attached to a horn 22. The ultrasonic stack (converter 18, booster 20, and horn 22) is driven by an ultrasonic power supply 23. The system 10 precisely controls key process parameters for accurate positioning of the sonic horn during welding processes. The controller 14 allows a user to control the horn 22 and part velocity, horn (weld) force, horn and part position, and weld amplitude of the sonic energy vibrations to preset profiles or in response to part requirements. The controller 14 also allows the user to program trigger (enable or disable) the sonic energy as a function of horn force, horn or table position, time, or an external input such as temperature or frequency. This enables the welding of areas having different energy requirements, such as welding volumes, surface areas, and material thicknesses.

Variable force in the Z direction can be achieved by using variable pneumatic force control (slow response) or varying the horn position using, for example, a stepper motor and drive mechanism, magnetics, piezoelectrics, lead screws, hydraulics, or combinations of these. Alternatively, the Z axis motion can be accomplished by moving an anvil (not shown) which can be mounted on the traversing table 12. Variable speed in the X, Y, and Z directions can be achieved by using variable pneumatic force control (slow response) or varying the position of the traversing table using a stepper motor and drive mechanism, magnetics, piezoelectrics, lead screws or hydraulics, or combinations of these.

Of the welding parameters, the amplitude is the easiest to change rapidly. Amplitude changes can be made electrically using commercially available welders. In many power supplies the amplitude can be varied by controlling the DC supply voltage within the power supply. Rapid changes of the weld speed and the weld force are more difficult to obtain than changes in weld amplitude.

For industrial applications it is desired that the system response be such that part speeds in the X-Y plane of 30 m/min (100 ft/min) can be used. For example, it is desired to be able to change the weld force by a factor of 5 in 12.5 milliseconds, with a maximum of 0.08 cm (0.030 in) movement of the weld horn in the Z direction, over no more than 0.64 cm (0.25 in) of table movement in the X direction. Hydraulic, piezoelectric, magnetic systems, or combinations of these, can meet these requirements.

The weld amplitude, displacement (horn-to-part position), weld speed, and weld force can vary as a function of the part position for continuous or scan welding, or as a function of time for plunge welding, to achieve a desired weld. The desired weld can have consistent or varying quality. By sensing weld quality, the controller can be programmed using other external input signals to adjust automatically any or all weld parameters to obtain the desired weld level. Some controlling methods include measuring incoming product thickness and automatically adjusting; measuring and controlling thickness of the weld itself; measuring and controlling weld temperature during welding; and measuring part frequency and energy feedback. Design data for the part weld area can be input from 3D modeling techniques.

Figures 1-4 show an example of a system that has been made, but do not limit the scope of the invention to the specifications given. The horn 22 is an acoustical tool generally made of aluminum, titanium, or sintered steel that can resonate at sonic or ultrasonic frequencies when driven by a commercially available ultrasonic power supply 23. The horn 22 can weld ultrasonically or otherwise and can operate using continuous or plunge welding. (The horn 22 will be described as providing ultrasonic energy throughout this description.) A rotary or traversing table 12 can move relative to the horn 22 to weld continuous or intermittent webs or piece parts. Alternatively, the table could be stationary while moving the horn.

The welding stack is mounted in the adapter 48 perpendicular to the traversing table 12 in the Z direction, imparts ultrasonic vibration to the parts to be welded, and moves in the Z direction. The converter 18 is a piezoelectric device which converts electrical energy into mechanical energy or vice versa. The booster 20 is a mechanical resonator, located between the converter 18 and the horn 22, which amplifies or deamplifies the amplitude of vibration.

The horn 22 is mounted perpendicular to the traversing table 12 using a frame 26. The traversing table 12 moves along the X axis on a base plate 28 and is controlled using a table actuator 30, such as a hydraulic servo-controlled drive mechanism, such as an MTS Series 247 actuator, with a maximum stroke of 71.1 cm (28 in) to control table position from 0 cm (0 in)(home position) to 66.40 cm (26.14 in). An MTS Temposonics™ displacement transducer serves as a position sensor 32 and provides an electrical feedback signal that indicates the actuator 30 position. The traversing table 12, to which an anvil can be attached, is an electroless nickel plated, steel table having a regular grid pattern of mounting holes in the top surface. The size of any anvil that is used is selected based on the size of the part being welded. Four linear bearings (not shown) are mounted under the table 12 and ride on rails rigidly attached to the base plate 28. The base plate 28 is a machined 10.2 cm (4 in) thick steel plate. The table 12 moves in the X-Y plane. Accelerometers 34, 36 are mounted on the table 12 and base plate 28 for stability and inertial force cancellation.

The frame 26 is a steel plate weldment of box-type construction mounted to the sides of the base plate 28 using a pivot centered at the table top surface and along the Z axis. The frame 26, including the Z axis actuator 38, can be tilted ±5° along the X axis.

Z axis force and position control is accomplished using the Z axis actuator 38. The Z axis actuator 38 includes a Z axis hydraulic cylinder, attached to a actuator housing 40, a servo valve assembly 42, an accumulator 44, and a Z actuator mounting bracket 46 attached to the Z axis actuator 38. The Z axis hydraulic cylinder has a maximum stroke of about 25.4 cm (10 in) to control the Z axis position from about 26.09 cm (10.272 in)(fully retracted) to about 0.616 cm (0.241 in)(below the table). A linear variable differential transformer is mounted inside the Z axis cylinder piston rod to provide an electrical feedback signal that indicates its position. The servovalve 42 converts a control signal from the controller 14 to control the direction and amount of fluid flow to the Z axis actuator 38 to control the movement of the Z axis cylinder piston and rod.

The ultrasonic horn 22, booster 20, and converter assembly 18 is mounted into an adapter 48 which rides on recirculating Z guide bearings and rails 50 mounted to the Z actuator mounting bracket. A load cell 52 is mounted between the adapter 48 and the Z axis cylinder piston rod. The load cell 52 provides the force feedback to the controller 14. An accelerometer 54 is also mounted on the adapter 48 for stability and inertial force cancellation.

The hydraulic power supply 24 provides pressurized hydraulic fluid at 81.4 l/min (21 gal/min) and 20.7 MN (3000 psi) to the servovalve 42. A reservoir holds the hydraulic fluid, a pump pressurizes the hydraulic fluid, a motor runs the pump, a heat exchanger cools the hydraulic fluid, and sensors monitor the level, pressure, and temperature of the hydraulic fluid, all in a known manner. Accumulators provide higher peak flow, as required.

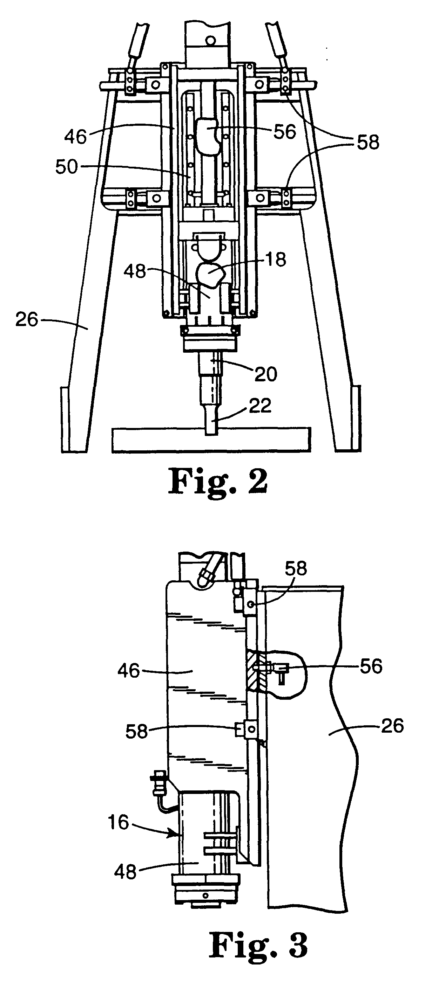

The Z actuator mounting bracket 46 can be adjusted ± 12.7 cm (5 in) along the Z axis. A hand-retractable spring plunger 56 (see also Figure 3) mounted on the back of the frame 26 facilitates positioning of the assembly by snapping into one of three detent positions (spaced 11.4 cm (4.5 in) apart) along the frame 26, although it can be positioned at any desired elevation. The Z actuator mounting bracket 46 can be adjusted up to ±2.54 cm (±1 in) and can be tilted up to ±2° along the Y axis. To move the Z actuator mounting bracket 46, the assembly is slid on the frame 26 until it is in the desired position, and then it is locked in position using clamps 58.

The angle of the horn 22 relative to the table 12 top surface can be adjusted to improve alignment between the part and the horn 22. The welding stack enclosed in the adapter 48 can be adjusted in the Z direction up to 5° from perpendicular relative to the Y axis and 2° from perpendicular relative to the X axis. Rotation around the X axis is accomplished by pivoting the bracket on the frame 26 and around the Y axis is accomplished by tilting the frame 26.

The Z axis actuator 38 can operate in a force mode with position limits or in a position mode with force limits. The actuator 38 can move this adapter 48 assembly rapidly to provide the set point weld force or position versus time values, table position in the X direction, or other input.

The controller 14 uses a closed loop circuit to monitor and control the weld force on the part during welding. The same drive system which provides the part position output drives the variable force system, which profiles the force as desired, in the Z direction. This allows modifying position, force, or both, to achieve a uniform weld force across the weld zone to achieve a strong, uniform weld, regardless of non-uniform weld areas, part geometry, and non-random thicknesses. Alternatively, any desired weld intensity profile can be attained. The controller 14 can display the set point force and position profile and actual response profile after the weld.

The system can operate at traversing speeds of 0 to 137 m/min (450 (ft/min). The traversing mechanism can accelerate the traversing table 12 from 0 to 61 m/min (200 ft/min) within 0.625 cm (0.25 in) or less of table travel at a maximum anvil weight of 667 N (150 lb) and a maximum weld drag force of 578 N (130 16).

The hydraulic servo-controlled table actuator 30 provides fast response to a speed versus position profile of the table in the X direction. The position accuracy is measured by the position sensor 32. The position sensor 32 measures the table position in the X direction. The sensor 32 is used for feedback control of the speed and position of the table 12.

The controller 14 can control movement of the traversing table 12 throughout the length of the travel in a predefined manner in a set point speed profile. The set point speed profile includes individual speed set points along the travel length of the table. The system allows programming of the weld variables at every 0.00254 cm (0.001 in) increment or every 1 millisecond. The controller 14 can provide a visual indication of the set point speed profile. The controller 14 has a feedback mechanism which provides feedback for closed loop control of the speed of the traversing table 12. The feedback is also used to collect real time data for a visual indication of the actual speed profile.

Force is difficult to vary accurately and quickly. A fast response drive mechanism allows the weld force to be continuously variable from 0 to 4448 N (1000 lb). With an identical specimen and identical program conditions, the weld force is repeatable within the following limits: 0 to 445 N ± 13.5 N (100 lb ± 3 lb), and 445 to 4448 N (100 to 1000 lb), ± 3%. The weld force can be increased or decreased by a factor of at least 5 in 12.5 milliseconds or less.

The welding system 10 can profile the Z axis in the position or force mode. When the weld part exerts an upward force on the horn 22 greater than the weld force set point value, the horn 22 "floats" at the set point force on the part, as long as the horn 22 is above the preset Z axis position.

If the Z axis actuator 38 is back-driven (pushed in the direction away from the part) in the Z direction, the resulting force errors are no more than 157.6 N for each cm/sec (90 lb for each in/sec) of disturbance, neglecting inertial effects of the ultrasonic stack and its mountings.

Transducers measure the force and position of the horn 22 with respect to the part. It is used for a feedback control of force and position in the Z direction. The controller 14 corrects any deviations measured by the force and position transducer. The controller 14 can display the set point force and position profile and the actual response profile after the weld.

An ultrasonic power supply 23 drives the welding stack at the desired frequency. An interface between the controller 14 and the ultrasonic power supply 23 provides a signal to the ultrasonic power supply 23 to profile the weld amplitude during welding. The vibration of the horn 22 can be measured and feedback control can regulate the amplitude to the desired set point profile.

The controller 14 enters, stores, displays, plots, and retrieves set point data profiles and the actual response data profiles. The controlled set points and recorded measurements include table speed command, table speed feedback, X axis position command, X axis position feedback, horn weld amplitude profile, Z axis position command, Z axis position feedback, Z axis force command, Z axis force feedback, and other external inputs, including energy, power, and temperature. The controller 14 commands the force/position actuator, amplitude, and speed/position actuator. The controller 14 provides sufficient multiple set points to enter the desired profiles.

The weld speed, weld force, Z position, and weld amplitude profiles can be created by locating the part at a given position and entering the desired weld speed, weld force, and weld amplitude set points to create the desired profiles.

The controller 14 provides an amplitude output in the range of -10 to 10 volts DC. This controls the weld amplitude throughout the length of travel in a predefined manner in the form of a set point amplitude profile for continuous welding or throughout the weld cycle for plunge welding. The controller 14 provides and plots a variable amplitude profile as a function of time, position, or external input and can provide a visual indication of the set point amplitude profile.

The welding system 10 can provide and plot a variable force, amplitude, and horn position profile as a function of time, or other external inputs, while the table remains stationary for plunge welding. The descent rate of the Z axis actuator is programmable from full acceleration down to 0.25 cm/sec (0.1 in/sec). A switch closure is actuated when a preset force from the load cell is sensed. Force adjustment is adjustable every millisecond during the weld cycle. The incremental force change occurs in ramp fashion, moving from one position to another with a defined slope. The force adjustments can be changed as a function of time or can be controlled by external inputs, such as a momentary pulse or switch closure. (The speed at which the horn approaches the part can be adjusted according to a position versus time profile.) At the activation of the force signal (when the preset force is attained) as determined by the force trigger profile, an internal timer signal can be activated to determine the time that the system remains in the force versus time mode. After the elapsed time, the actuator retracts at a programmable rate. The weld duration can also be determined by horn position, weld velocity, weld force, weld time, or other external inputs such as power, energy, frequency, and temperature. Also, within a given cycle, multiple weld durations can be achieved.

Contrary to U.S. -A- . 4,973,876, this invention profiles amplitude, force, and speed of the table according to the part design during scan welding. The amplitude is changed during welding by an external signal.

Contrary to U.S. -A- 5,199,630, the present invention does not measure amplitude and has no comparator in the loop to correct any deviation. The amplitude follows a set point profile during a weld. If amplitude deviates from the set point profile, then for the next weld, the force, speed of the table, or input voltage is changed to get the desired set point values. The present invention also profiles force, position, and speed changes during scan welding. The change of amplitude is linked to changes in force and speed or position of the part. U.S. -A- 5,199,630 maintains a constant amplitude, rather than changing the amplitude during welding, as the polymer changes its state.

Contrary to the Kunststoffe publication, this invention increases or decreases force for both weld time or speed and position and hold time for scan and plunge welding modes. The apparatus can profile force, Z position, and amplitude as a function of time (plunge welding), and also can profile force, amplitude, weld position, and speed of the part for scan welding. All parameters (force, amplitude, position, and speed) are interrelated and will be changed in a decreasing or increasing manner depending on the part. The force change as a function of position is achieved in 12.5 milliseconds or less. The invention permits rapid parameter changes which are critical to high speed bonding.

## Claims

1. A method of welding parts comprising
- bringing a part and horn (22) into contact by providing relative motion between the part and the horn (22) generally parallel to a working surface of the horn (22),
- applying high frequency energy from the horn (22) to the part,
- varying, using feedback control in real time, during welding the welding parameters, namely weld force, weld speed, weld amplitude, part position, and horn position as a function of one or more external preprogrammed or measured inputs, as necessary, including temperature, weld velocity, force, part position, frequency, weld volume, and weld energy, thereby to weld areas of different energy requirements, and
- automatically adjusting, using the feedback control in real time the weld parameters in response to the measured inputs to obtain the desired weld level,
- wherein the varying step comprises varying the weld amplitude, weld force, horn position, and weld speed to control weld intensity without requiring using mechanical stops, cam followers, or sacrificial weld areas.

2. The method of claim 1 wherein the adjusting step comprises at least one of: measuring incoming part thickness and automatically adjusting, measuring and controlling weld thickness; measuring and controlling weld temperature during welding; measuring part frequency; measuring weld energy; and controlling weld quality.

3. An apparatus for welding parts comprising:
- a high frequency horn (22),
- means (30) for providing relative motion between the horn (22) and the part to be welded,
- means (14) for varying, using feedback control in real time, during welding the weld parameters, namely the weld force, weld speed, weld amplitude, part position and horn position, as necessary, to weld areas of different welding volumes, surface areas, and material thicknesses as a function of one or more external preprogrammed or measured inputs, as necessary, including temperature, weld velocity, force, part position frequency, weld volume, and weld energy, thereby to weld areas of different energy requirements, and
- means (14) for automatically adjusting, using feedback control in real time the weld parameters in response to the measured inputs to obtain the desired weld level,
- wherein the varying means (14) varies the weld amplitude, weld force, horn position, and weld speed to control weld intensity without requiring using mechanical stops, cam followers, or sacrificial weld areas.

4. The apparatus of claim 3, wherein the adjusting means comprises at least one of: measuring incoming part thickness and automatically adjusting, measuring and controlling weld thickness; measuring and controlling weld temperature during welding; measuring part frequency; measuring weld energy; and controlling weld quality.

## Patentansprüche

1. Verfahren zum Schweißen von Teilen, mit den folgenden Schritten:
- Bringen eines Teils und des Schweißkopfs (22) in Kontakt miteinander durch im wesentlichen parallel zur Arbeitsfläche des Schweißkopfs (22) erfolgende Relativbewegung zwischen dem Teil und dem Schweißkopf (22);
- Aufbringen von Hochfrequenzenergie vom Schweißkopf (22) auf das Teil;
- Variieren, unter Verwendung von Rückkopplungssteuerung in Echtzeit, der Schweißparameter während des Schweißens, nämlich der Schweißkraft, der Schweißgeschwindigkeit, der Schweißamplitude, der Teileposition, und der Schweißkopfposition als Funktion eines oder mehrerer extern programmierter oder gemessener Eingangssignale, je nach Notwendigkeit, einschließlich der Temperatur, der Schweißgeschwindigkeit, der Kraft, der Teileposition, der Frequenz, des Schweißvolumens und der Schweißenergie, um so Bereiche unterschiedlicher Energieanforderungen zu schweißen, und
- unter Verwendung der Rückkopplungssteuerung in Echtzeit automatisches Einstellen der Schweißparameter in Reaktion auf die gemessenen Eingangssignale, um das gewünschte Schweißniveau zu erreichen,
- wobei der Schritt des Variierens das Variieren der Schweißamplitude, der Schweißkraft, der Schweißkopfposition und der Schweißgeschwindigkeit zum Steuern der Schweißintensität umfaßt, ohne die Erfordernis mechanischer Anschläge, Nockenfolger oder opferbarer Schweißbereiche.

2. Verfahren nach Anspruch 1, bei dem der Einstellschritt wenigstens einen der folgenden Schritte aufweist: Messen der Dicke des ankommenden Teils und automatisches Einstellen, Messen und Steuern der Schweißdicke; Messen und Steuern der Schweißtemperatur während des Schweißens; Messen der Frequenz des Teils; Messen der Schweißenergie; und Steuern der Schweißqualität.

3. Vorrichtung zum Schweißen von Teilen, mit:
- einem Hochfrequenzschweißkopf (22),
- einer Einrichtung (10) zum Bewirken von Relativbewegung zwischen dem Schweißkopf (22) und dem zu schweißenden Teil,
- einer Einrichtung (14) zum Variieren, unter Verwendung von Rückkopplungssteuerung in Echtzeit, der Schweißparameter während des Schweißens, nämlich der Schweißkraft, der Schweißgeschwindigkeit, der Schweißamplitude, der Teileposition, und der Schweißkopfposition, sofern erforderlich, um Schweißbereiche unterschiedlicher Schweißvolumina, Flächenbereiche und Materialdicken als Funktion eines oder mehrerer extern programmierter oder gemessener Eingangssignale, je nach Notwendigkeit, einschließlich der Temperatur, derSchweißgeschwindigkeit, der Kraft, der Teileposition, der Frequenz, des Schweißvolumens und der Schweißenergie, um so Bereiche unterschiedlicher Energieanforderungen zu schweißen, und
- einer Einrichtung (14), die unter Verwendung der Rückkopplungssteuerung in Echtzeit die Schweißparameter in Reaktion auf die gemessenen Eingangssignale automatisch einstellt, um das gewünschte Schweißniveau zu erreichen,
- wobei die Einrichtung (14) zum Variieren die Schweißamplitude, die Schweißkraft, die Schweißkopfposition und die Schweißgeschwindigkeit zum Steuern der Schweißintensität variiert, ohne daß mechanische Anschläge, Nockenfolger oder opferbare Schweißbereiche erforderlich sind.

4. Vorrichtung nach Anspruch 3, bei der die Einstelleinrichtung wenigstens einen der folgenden Vorgänge durchführt: Messen der Dicke des ankommenden Teils und automatisches Einstellen, Messen und Steuern der Schweißdicke; Messen und Steuern der Schweißtemperatur während des Schweißens; Messen der Frequenz des Teils; Messen der Schweißenergie; und Steuern der Schweißqualität.

## Revendications

1. Un procédé de soudage de pièces comprenant les étapes consistant à:
- amener en contact une pièce et un cornet (22) en communiquant entre la pièce et le cornet (22) un mouvement relatif généralement parallèle à une surface de travail du cornet (22),
- appliquer du cornet (22) à la pièce une énergie de haute fréquence,
- modifier au cours du soudage, en utilisant un réglage à rétroaction en temps réel, les paramètres de soudage, c'est-à-dire la force de soudure, la vitesse de soudure, l'amplitude de soudure, la position de la pièce, et la position du cornet, en fonction d'une ou plusieurs entrées externes préprogrammées ou mesurées, selon les besoins, y compris la température, la rapidité de soudure, la force, la position de la pièce, la fréquence, le volume de soudure et l'énergie de soudure, afin de souder ainsi des zones pour lesquelles les exigences d'énergie sont différentes, et
- ajuster automatiquement en temps réel les paramètres de soudure en utilisant un réglage à rétroaction, en réponse aux entrées mesurées, afin d'obtenir le niveau de soudure souhaité,
- dans lequel l'étape de modification comprend des modifications de l'amplitude de soudure, de la force de soudure, de la position du cornet et de la vitesse de soudure afin de régler l'intensité de soudure sans exiger ni arrêts mécaniques, ni contrecames, ni zones de soudure sacrificielles.

2. Le procédé selon la revendication 1, dans lequel l'étape d'ajustement comprend au moins l'une des étapes suivantes: mesurer l'épaisseur de la pièce entrante et ajuster, mesurer et régler automatiquement l'épaisseur de soudure; mesurer et régler la température de soudure pendant le soudage; mesurer la fréquence de pièce; mesurer l'énergie de soudure; et régler la qualité de soudure.

3. Un appareil à souder de pièces comprenant:
- un cornet (22) à haute fréquence,
- un moyen (30) de communication d'un mouvement relatif entre le cornet (22) et la pièce à souder,
- un moyen (14) destiné à modifier au cours du soudage, en utilisant un réglage à rétroaction en temps réel, les paramètres de soudage, c'est-à-dire la force de soudure, la vitesse de soudure, l'amplitude de soudure, la position de la pièce, et la position du cornet, selon les besoins, afin de souder des zones à volumes, superficies et épaisseurs de matière de soudage différents, en fonction d'une ou plusieurs entrées externes préprogrammées ou mesurées, selon les besoins, y compris la température, la rapidité de soudure, la force, la position de la pièce, la fréquence, le volume de soudure et l'énergie de soudure, afin de souder ainsi des zones pour lesquelles les exigences d'énergie sont différentes, et
- un moyen (14) d'ajustement automatique qui utilise un réglage à rétroaction en temps réel des paramètres de soudure, en réponse aux entrées mesurées, afin d'obtenir le niveau de soudure souhaité,
- dans lequel le moyen de modification (14) modifie l'amplitude de soudure, la force de soudure, la position du cornet et la vitesse de soudure afin de régler l'intensité de soudure sans exiger ni arrêts mécaniques, ni contre-cames, ni zones de soudure sacrificielles.

4. L'appareil selon la revendication 3, dans lequel le moyen d'ajustement comprend au moins l'une des capacités suivantes: mesurer l'épaisseur de la pièce entrante et ajuster, mesurer et régler automatiquement l'épaisseur de soudure; mesurer et régler la température de soudure pendant le soudage; mesurer la fréquence de pièce; mesurer l'énergie de soudure; et régler la qualité de soudure.
